# EUROPÄISCHE PATENTSCHRIFT

(11) **EP 3 273 382 B1**
(45) Veröffentlichungstag und Bekanntmachung des Hinweises auf die Patenterteilung: **29.08.2018**
(21) Anmeldenummer: 17179687.3
(22) Anmeldetag: 05.07.2017
(51) Int. Cl.: G06K 7/10

(54) **RFID-LESEVORRICHTUNG UND VERFAHREN ZUR FACHBELEGUNGSERKENNUNG IN EINEM REGAL**
RFID READING DEVICE AND METHOD FOR COMPARTMENT OCCUPANCY DETECTION IN A SHELF
DISPOSITIF DE LECTURE RFID ET PROCÉDÉ DE RECONNAISSANCE D'OCCUPATION DE CASIER SUR UNE ÉTAGÈRE

(30) Priorität: 18.07.2016 DE 102016113205
(43) Veröffentlichungstag der Anmeldung: 24.01.2018
(73) Patentinhaber: Sick AG, 79183 Waldkirch (DE)
(72) Erfinder: Günther, Alexander, 79194 Gundelfingen (DE); Fislage, Michael, 74211 Leingarten (DE)

(56) Entgegenhaltungen:
- DE-A1-102013 222 263
- US-A1- 2014 277 695

## Beschreibung

Die Erfindung betrifft eine RFID-Lesevorrichtung sowie ein Verfahren zur Fachbelegungserkennung in einem Regal nach dem Oberbegriff von Anspruch 1 beziehungsweise 9.

RFID-Lesesysteme dienen der automatischen Identifikation von Objekten. Dazu werden an den Objekten befestigte RFID-Transponder ausgelesen und gegebenenfalls Informationen in den Transponder zurückgeschrieben. Die erfassten Informationen werden verwendet, um den Aufenthaltsort, das Ziel oder sonstige Eigenschaften der Objekte zu erfassen und dadurch Lagerung und Fluss von Gütern und Produkten zu steuern. Es gibt verschiedene Typen von RFID-Transpondern, die sich beispielsweise in den verwendeten Frequenzen oder darin unterscheiden, ob sie aktiv mit eigener Energieversorgung oder passiv mit Sendeenergie des Lesesystems arbeiten. Ein Beispiel ist der etablierte Ultrahochfrequenzstandard (UHF) ISO 18000-6 für passive Transponder, die nach dem Backscatter-Verfahren ausgelesen werden.

Die mit Transpondern versehenen Objekte werden vor allem bei der Lagerung häufig geordnet gestapelt und in mehreren Ebenen oder Reihen angeordnet. Das typische Beispiel hierfür ist ein Regal mit Fächern oder Behälterreihen. In diesem Fall soll das RFID-Lesesystem die Anforderung erfüllen, die jeweils aktuelle Regalbelegung zu erfassen, also welche Fächer belegt sind oder ob sich an einer bestimmten Regalposition ein Behälter befindet und was das jeweilige Fach oder der Behälter momentan enthält. Durch Zurückschreiben auf den Transponder kann die Information der Transponder auch bei Nachfüllen oder Entnahme von Objekten konsistent gehalten werden. Transponder können sich hierbei sowohl an den jeweiligen Fächern beziehungsweise Behältern als auch an den einzelnen darin gelagerten Objekten befinden.

Eine Anwendung für die automatische Erfassung der Regalbelegung ist die Produktionsprozesssteuerung, wo die Lagerhaltung durch Kenntnis der lokalen Bestände und des an der Entnahme gemessenen momentanen Bedarfs von Ausgangsmaterialien und Zwischenprodukten erheblich reduziert werden kann (Kanban-Prinzip). So sollen beispielsweise in einem Kanban-Regal Behälter bei Beladung auf der Regalrückseite beziehungsweise bei Entnahme auf der Regalvorderseite erkannt werden. Dazu müssen RFID-Transponder über die gesamte Regalbreite gelesen werden, und das auch bei unterschiedlich breiten Kisten oder Fachbreiten. Hinzu kommen geringe Abstände zwischen Fächern und metallische Ausführungen der Regale oder Behälter.

Im Stand der Technik zur Regalbelegungserkennung eingesetzte RFID-Systeme verwenden mehrere Lesevorrichtungen in seitlicher Montage mit abgesetzten Antennen pro Regalebene, Behälterreihe oder sogar Behälter. Die vorgegebene seitliche Antennenposition erzwingt eine seitliche Anordnung der Transponder. Außerdem entstehen hohe Integrationskosten für den Aufwand zur Installation der Antennen und vor allem deren Verkabelung. Dieser Aufwand fällt nicht nur einmalig an, sondern erneut bei Wartung oder Veränderungen des Regals, beispielsweise bei Einsatz anderer Behälter. Außerdem ist es schwer oder sogar unmöglich, Behälter genau zu lokalisieren und damit Regalfächern zuzuordnen.

Die EP 2 903 086 A1 offenbart eine RFID-Lesevorrichtung zur Regalbelegungserkennung. Dabei wird eine Vielzahl von Antennenleiterkarten in ein langgestrecktes Hohlprofil eingesetzt. Der technische Aufwand ist dabei vergleichsweise hoch, weil praktisch an jeder Lesestelle eine abstimmbare Antenne vorhanden ist. Somit wird zwar ein sehr geringer Installations- und Wartungsaufwand erzielt, dies aber bei hohen Herstellkosten für zahlreiche einzelne Antennen. Es wird dabei auch vorgeschlagen, zusätzliche Lichtschranken anzubringen, um zu erkennen, ob sich an einer jeweiligen Position ein Behälter befindet. Eine solche Lokalisierung vollständig durch Zusatzsensorik ist zwar denkbar, erfordert aber kostenintensive Lösungen wie beispielsweise zahlreiche Lichtschranken, um tatsächlich jede Position im Regal zu unterscheiden. Ein alternativer Ansatz ist, die Antenne selbst als Sensor zur Anwesenheitserkennung zu nutzen. Dazu sind aber kostenintensive segmentierbare Antennen mit eng begrenzten Lesefeldern samt aufwändiger intelligenter Auswertung erforderlich.

Die US2014/0277695 A1 offenbart einen Probenträger, in dem Proben mit einem RFID-Tag und einem Barcode matrixartig angeordnet werden. Es werden durch mehrere aufrecht und zueinander parallel in einen Boden des Probenträgers eingesetzte Elektronikkarten Reihen für die Proben gebildet. Die Elektronikkarten weisen einerseits je eine sich über die Reihe erstreckende Antenne auf, um mit RFID-Tags der Proben einer benachbarten Reihe oder beiden benachbarten Reihen zu kommunizieren. Andererseits ist auf den Elektronikkarten für jede Matrixposition ein Lichtsender- und Empfängerpärchen angeordnet, das nach dem Prinzip einer Lichtschranke erkennt, ob sich an der jeweiligen Position eine Probe befindet oder nicht.

Aus der DE 10 2013 222 263 A1 ist ein Warenbestandsverwaltungssystem bekannt, welches unter anderem an einem Warenregal eingesetzt werden kann. Zur Überwachung werden eine Vielzahl von Sensoren vorgeschlagen, darunter auch eine optische Erfassungseinrichtung, insbesondere mit Lichtschranke oder Barcodescanner sowie eine Kombination aus einem Transponder und einem Transponderlesegerät.

Es ist daher Aufgabe der Erfindung, die Fachbelegungserkennung mit einer RFID-Lesevorrichtung zu verbessern.

Diese Aufgabe wird durch eine RFID-Lesevorrichtung sowie ein Verfahren zur Fachbelegungserkennung in einem Regal nach Anspruch 1 beziehungsweise 9 gelöst. Die RFID-Lesevorrichtung ist in der Lage, über RFID-Signale mit RFID-Transpondern zu kommunizieren. Außerdem ist ein Zusatzsensor für die Erfassung von Objekten zur Anbringung an dem Regal oder in dessen Umgebung vorgesehen. Die Erfindung geht nun von dem Grundgedanken aus, Veränderungen der Fachbelegung durch eine Kombination von Informationen der Antenne und des Zusatzsensors zu erkennen und zu lokalisieren. So wird erkannt, ob und wo Waren oder Behälter in dem Regal vorhanden sind beziehungsweise sie verschoben, eingestellt oder entnommen werden. Die Informationen der Antenne können sehr einfach sein, etwa lediglich welche Antenne mit einem Transponder kommuniziert, und sind in der Regel unabhängig von dem konkreten Austausch an RFID-Informationen. Die Informationen der Antenne müssen nur einen Teil der Lokalisierung ermöglichen, da sie durch die Informationen des Zusatzsensors ergänzt werden, der im Übrigen mehrere Einzelsensoren umfassen kann. Im zweiten Schritt ist dann eine Zuordnung der aus einem RFID-Transponder gelesenen Daten zu einer Regalposition denkbar, in der eine Änderung der Fachbelegung erkannt wurde.

Die Erfindung hat den Vorteil, dass durch Kombination von Antenne und Zusatzsensor eine automatische Identifikation und Zuordnung eines Objekts, wie einer Ware oder eines Behälters, zu einem Regalfach ermöglicht wird. Die Antenne ist ohnehin vorhanden, um RFID-Informationen zu lesen. Durch eine Doppelfunktion wird sie auch an der Lokalisierung beteiligt. Weder die Antenne noch deren Auswertung muss dabei komplex sein, weil nur ein Beitrag und keine vollständige Lokalisierung erwartet wird. Das gilt entsprechend für den Zusatzsensor, der ebenfalls sehr einfach und kostengünstig bleiben kann. Es wird dennoch eine hohe Ortsauflösung erreicht. Die erfindungsgemäße RFID-Lesevorrichtung hat einen geringen Platzbedarf vor dem Regal, ist auf variable Behältergrößen und Regalgrößen skalierbar und bietet ein modulares Konzept auch für nicht standardisierte Regalsysteme. Dabei lässt sie sich kostengünstig einrichten und integrieren, auch in bestehende Regalsysteme nachrüsten.

Der zusätzliche Sensor ist bevorzugt ein optoelektronischer Sensor. Das Detektionsprinzip ist völlig unabhängig von RFID-Frequenzen, so dass gegenseitige Störungen ausgeschlossen sind. Außerdem gibt es eine Vielzahl von einsetzbaren zahlreiche optoelektronischen Sensoren, die einfache Einzelsensoren wie Lichtschranken, aber auch komplexere Flächensensoren wie Laserscanner sein können.

Die Antenne ist bevorzugt parallel zu Regalelementen angeordnet oder als Regalelement genutzt. Je nach Ausführungsform ist die Antenne selbst Teil des Regals, dient zu dessen Stabilisierung oder ist zumindest so in das Regal eingebaut, dass es anders als eine herkömmliche Verkabelung keine Abläufe stört. Die Antenne kann waagerecht oder senkrecht montiert sein, um gezielt entsprechend zueinander angeordnete Regalabschnitte oder Behälter zu erfassen.

Die Antenne ist bevorzugt eine über die Regalbreite oder Regalhöhe langgestreckte Antenne, beispielsweise eine Stabantenne. Die Antenne kann auch aus mehreren in Reihe geschalteten Antennen zusammengesetzt sein. Es genügt ein relativ einfaches Antennenkonzept mit Feldabstrahlung über die gesamte Länge der Antenne. Eine Lokalisierung wird mit Hilfe des Zusatzsensors erreicht.

Die RFID-Lesevorrichtung weist bevorzugt je eine Antenne an jeder Regalebene auf, wobei die Antennen jeweils Antennenkeulen nur nach oben oder nur nach unten aufweisen. Die Antenne hat also eine Richtcharakteristik, bei der gezielt nur in eine Richtung senkrecht zur Längserstreckung abgestrahlt wird (hohes Front-to-Back-Ratio). Das lässt sich auch durch eine metallische Abschirmung in die nicht gewünschte Richtung erreichen. Wenn noch die Reichweite der Antenne entsprechend begrenzt wird, ist eine Antenne selektiv für eine Regalebene zuständig.

Alternativ weist die RFID-Lesevorrichtung je eine Antenne an jeder zweiten Regalebene auf, wobei die Antennen jeweils Antennenkeulen nach oben und nach unten aufweisen. Sie hat also symmetrische Antennenkeulen oder ein geringes Front-to-Back-Ratio. Eine Richtcharakteristik, die eine unnötige Abstrahlung nach vorne und hinten beschränkt, ist dennoch nützlich. Derartige Antennen sind jeweils für zwei Regalebenen zuständig, wobei auch denkbar ist, sie dennoch in jeder Regalebene anzubringen und die redundanten Zusatzinformationen geeignet auszuwerten.

Antenne und Zusatzsensor sind bevorzugt derart ausgebildet und angeordnet, dass die Informationen der Antenne eine örtliche Zuordnung zu einer Regalebene und die Informationen des Zusatzsensors eine örtliche Zuordnung innerhalb der Regalebene ermöglichen. Als Information zur Bestimmung der Regalebene genügt zu erkennen, welche Antenne einen RFID-Transponder lesen kann beziehungsweise auch ohne RFID-Lesevorgang an welcher Antenne eine Veränderung beispielsweise durch einen metallischen Behälter und entsprechende Verstimmung stattfindet. Der Zusatzsensor muss dann lediglich noch die Ortsinformation innerhalb der Regalebene liefern. Sofern das Regal vertikale Trennelemente hat, ist auch eine komplementäre vertikale Antennenanordnung mit horizontal erfassenden Zusatzsensoren denkbar. Gedacht ist aber an den Fall eines Regals, das nur Lagerebenen zur Verfügung stellt und in dem die eigentlichen Regalfächer durch Behälter variabler Größe und Position gebildet werden. Dort würden vertikale Antennen stören, nicht dagegen eine berührungslose vertikale Abtastung durch den Zusatzsensor.

Der Zusatzsensor weist bevorzugt eine Anordnung von Lichtschranken oder ein Lichtgitter auf. Das sind einfache und sehr verlässliche Sensoren, um mit wenig Platz- und Verkabelungsanforderungen die Anwendung zu lösen, die noch fehlende vertikale Ortsinformation bereitzustellen.

Der Zusatzsensor ist bevorzugt derart ausgebildet und angeordnet, dass die Informationen des Zusatzsensors eine örtliche Zuordnung in horizontaler und vertikaler Richtung ermöglichen. Das ist eine Alternative mit einem mächtigeren Zusatzsensor, etwa einem Laserscanner, der selbst schon Ortsinformationen in zwei Dimensionen erfasst. Die Informationen der Antennen werden dann zur Plausibilisierung oder Verfeinerung der Ortsinformation genutzt.

Die Antenne und der Zusatzsensor sind bevorzugt derart am Regal angeordnet, dass ein Einstellen und/oder eine Entnahme von Waren oder Behältern erkannt wird. Bei einem Kanban-Regal ist dies an der Vorder- und/oder Rückseite.

Antenne und/oder der Zusatzsensor weisen bevorzugt ein Anzeigeelement auf. Anwendungsbeispiele sind Fehlermeldungen, Anzeigen des Belegungszustands, Anwesenheitsanzeige eines Behälters, Eingabe einer Auffüllung oder Entnahme, Anzeigen zu entnehmender oder nachzufüllender Objekte, oder die Anzeige der aus dem Transponder ausgelesenen Information. Für die Anzeige der meisten dieser Informationen genügen einfache Blink- oder Farbcodes von kostengünstigen LEDs. Insbesondere kann an Antenne und Zusatzsensor gleichzeitig eine Anzeige von Zeile und Spalte erfolgen, um ein Auffüllen oder eine Entnahme einzufordern oder zu quittieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Regals mit einer erfindungsgemäßen RFID-Lesevorrichtung;
- Fig. 2: eine vereinfachte Darstellung des Regals zur Darstellung der Lesefelder der jeweiligen Antennen;
- Fig. 3: eine Seitenansicht des Regals zur Darstellung der Montageposition der RFID-Lesevorrichtung;
- Fig. 4: eine Darstellung ähnlich Figur 2 eines Regals mit alternativen Lesefeldern der jeweiligen Antenne; und
- Fig. 5: eine Seitendarstellung zu Figur 4.

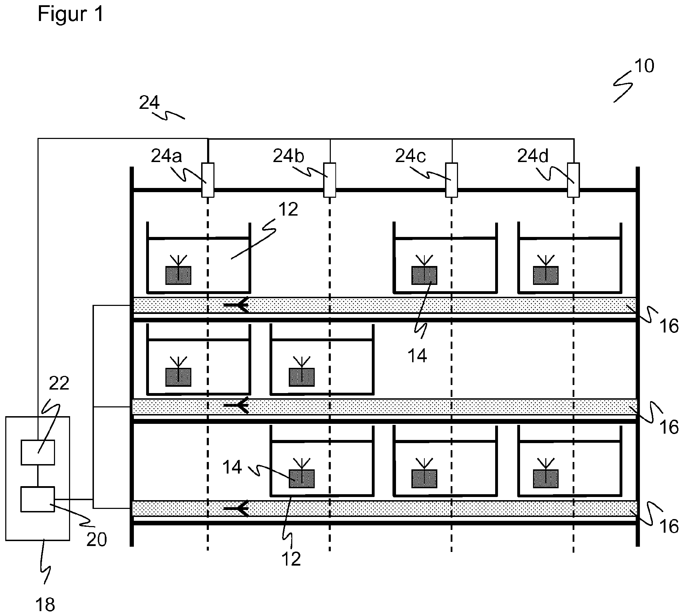

Figur 1 zeigt eine Übersichtsdarstellung eines Regals 10 mit einer Vielzahl von Behältern 12, insbesondere Kanban-Behälter. In den Behältern 12 werden nicht dargestellte Objekte gelagert. In anderen Ausführungsformen können Fächer durch das Regal 10 selbst abgetrennt beziehungsweise Objekte ohne Behälter 12 gelagert sein. Die Behälter 12 und/oder die darin befindlichen Objekte sind mit Transpondern 14 versehen.

An dem Regal 10 sind mehrere langgestreckte Antennen 16 angebracht. Diese Antennen 16 sind Teil einer RFID-Lesevorrichtung 18, die in Figur 1 als abgesetzter Block dargestellt ist. Alternativ ist aber möglich, die RFID-Lesevorrichtung 18 zumindest teilweise oder auch vollständig in das Regal 10 zu integrieren. Die RFID-Lesevorrichtung 18 weist einen RF-Transceiver 20, der an die Antennen 16 angeschlossen ist, und eine Steuer- und Auswerteeinheit 22 auf.

An dem Regal 10 ist außerdem ein Zusatzsensor 24 zur Objekterfassung angebracht, hier als Beispiel eine Anordnung von Lichtschranken 24a-d. Die Lichtschranken 24a-d sind senkrecht zur Papierebene versetzt vor dem Regal 10 angeordnet und registrieren deshalb eine Strahlunterbrechung, wenn ein Behälter 12 eingestellt oder entnommen beziehungsweise bei entsprechend breitem Erfassungsstrahl oder Strahlraster auch, wenn darauf zugegriffen wird.

Die RFID-Lesevorrichtung 20 liest die Transponder 14 in an sich bekannter Weise aus. Dazu sind die Funktionen eines üblichen RFID-Verfahrens beispielsweise gemäß ISO 18000-6 in der Steuer- und Auswerteeinheit 22 implementiert, und es werden über den RF-Transceiver 20 und die Antennen 16 die für eine Kommunikation mit den Transpondern 14 erforderlichen RFID-Signale ausgetauscht.

Um die Belegung der einzelnen Regalpositionen mit Behältern 12 zu erfassen, wertet die Steuer- und Auswertungseinheit 22 eine Kombination von Informationen der Antennen 16 und des Zusatzsensors 24 aus. In der Ausführungsform nach Figur 1 liefert die Antenne die Ortsinformation über die Regalebene, nämlich indem festgestellt wird, welche Antenne 16 durch den Behälter 12 beeinflusst wird, beispielsweise weil sich ihr Resonanzverhalten ändert, oder welche Antenne einen RFID-Transponder 14 des Behälters 12 lesen kann. Die fehlende Ortsinformation innerhalb der Regalebene liefert eine Strahlunterbrechung der entsprechenden Lichtschranke 24a-d. Eine andere Möglichkeit ist, eine RFID-Lesung durch Strahlunterbrechung einer Lichtschranke 24a-d triggern zu lassen, womit die Ortsinformation in horizontaler Richtung bereits erfasst ist. Es wird dann festgestellt, welche Antenne 16 mit einem RFID-Transponder 14 des unterbrechenden Objekts kommunizieren kann, um auch die Regalebene zu ergänzen, d.h. die fehlende Ortsinformation in vertikaler Richtung.

Dadurch wird die Zuordnung von Objekten und Behältern 12 zu einem jeweiligen Fach beziehungsweise einer Position in dem Regal 10 errechnet. Die RFID-Lesevorrichtung 18 oder ein übergeordnetes System (Warehouse Management, ERP), an das die RFID-Lesevorrichtung 18 angeschlossen ist, kennt auf diese Weise die jeweils aktuelle Belegung des Regals 10 mit Behältern 12 und Objekten. Übrigens soll der übliche Begriff RFID-Lesevorrichtung 18 keineswegs ausschließen, dass auch RFID-Transponder 14 beschrieben werden, wobei aber das Lesen in der Regel die wichtigere Aufgabe ist.

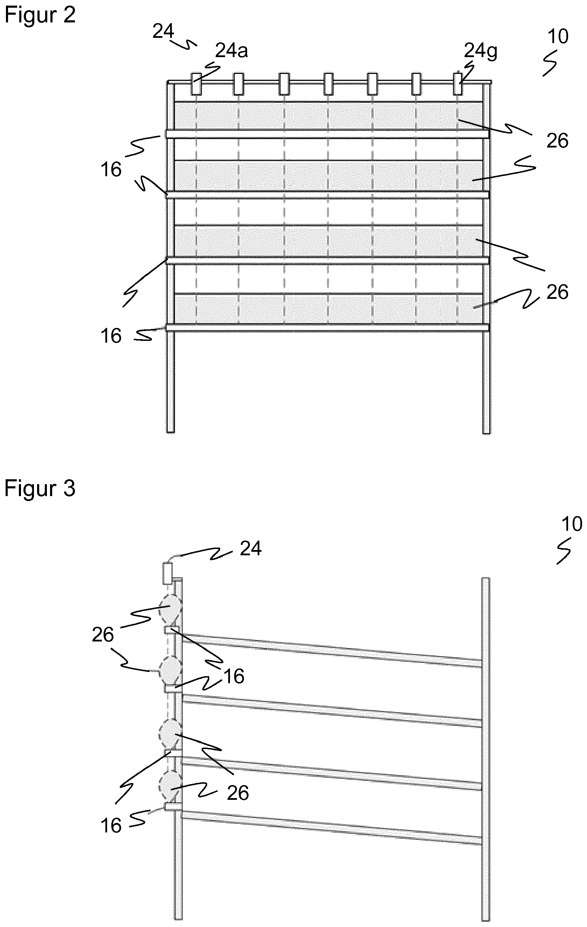

Figur 2 zeigt das Regal 10 noch einmal vereinfacht von vorn. Dabei sind nur der Rahmen des Regals 10 sowie das zur Lokalisierung genutzte Raster der Antennen 16 und des Zusatzsensors 24 gezeigt. Das verdeutlicht noch einmal die Aufgabenteilung von Antennen 16 und Zusatzsensor 24 bei der örtlichen Zuordnung in horizontale und vertikale Achsen.

Die Antennenkeulen 26 sind durch Grauschattierung über ihrer jeweiligen Antenne 16 angedeutet. In dieser Ausführungsform haben die Antennen 16 ein Nahfeld mit hohem Front-to-Back-Ratio, sie erfassen deshalb RFID-Transponder 14 nur in einer dedizierten Regalebene. Dadurch kann eine RFID-Lesung durch eine Antenne 16 sehr einfach einer Regalebene zugeordnet werden. Die fehlende Spalten-Position innerhalb der Regalebene liefert der Zusatzsensor 24.

Figur 3 zeigt eine zugehörige Seitenansicht eines Regals 10, das beispielhaft als Kanban-Regal ausgebildet ist. Es wird von einer Seite befüllt, in der Darstellung der linken Seite, und auf der anderen Seite werden Objekte entnommen. Die Schrägstellung der Regalebenen bewirkt, dass die Objekte zur Entnahmeseite nachrutschen. Die RFID-Lesevorrichtung 10 ist hier auf der Seite montiert, auf der das Regal 10 befüllt wird. Dementsprechend findet die RFID-Identifizierung, die Lokalisierung von Objekten und Behältern 12 sowie die Zuordnung während des Befüllens statt. Deutlich sind die nur nach oben gerichteten Antennenkeulen 26 zu erkennen, die eine Zuordnung zu einer Regalebene ermöglichen. Die Zuordnung innerhalb der Regalebene durch den Zusatzsensor 24 ist in der Seitenansicht nicht illustriert. Es ist denkbar, die RFID-Lesevorrichtung 10 alternativ oder zusätzlich an der anderen Seite des Regals 10 zu montieren, um Entnahmen zu erkennen, zu lokalisieren und zu identifizieren.

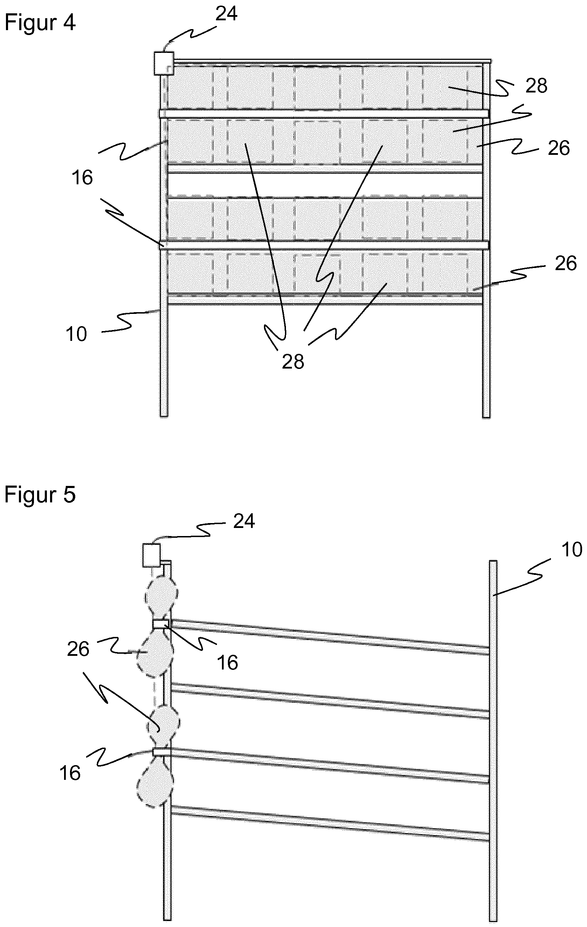

Die Figuren 4 und 5 zeigen eine Vorderansicht und eine Seitenansicht entsprechend den Figuren 2 und 3 für eine weitere Ausführungsform der RFID-Lesevorrichtung 18. Hier ist als Zusatzsensor 24 anstelle einer Lichtschrankenanordnung ein Flächensensor montiert, beispielsweise ein Laserscanner, der feststellen kann, in welches Teilfeld 28 ein Eingriff erfolgt. Dieser Zusatzsensor 24 ist also schon für sich allein in der Lage, in zwei Achsen zu lokalisieren. Obwohl dies in der Praxis genügen kann, werden die Informationen von der Antenne 16 dennoch erfindungsgemäß ebenfalls genutzt, um diese Lokalisierung zu überprüfen beziehungsweise zu verfeinern.

Außerdem sind in dieser Ausführungsform auch die Antennen 16 modifiziert, weisen nämlich nun ein Nahfeld mit niedrigerem Front-to-Back-Ratio auf. Dadurch entstehen Antennenkeulen 26, die RFID-Transponder 14 sowohl in der oberhalb als auch der unterhalb gelegenen Regalebene erfassen. Es sind dadurch prinzipiell halb so viele Antennen 16 nur für jede zweite Regalebene ausreichend. Alternativ bleibt die Anzahl der Antennen 16 unverändert. Das bietet die Möglichkeit, RFID-Transponder 14 von zwei Seiten zu lesen, die somit variabler an Objekten angebracht werden können.

Obwohl die Figuren 4 und 5 zugleich als Zusatzsensor 24 einen Flächensensor und andere Antennenkeulen 26 einführen, sind diese Modifikationen auch nur einzeln denkbar.

## Patentansprüche

1. RFID-Lesevorrichtung (18) zur Fachbelegungserkennung in einem Regal (10) mit mindestens einer Antenne (16), einem an die Antenne (16) angeschlossenen RF-Transceiver (20), einer Steuer- und Auswertungseinheit (22), welche dafür ausgebildet ist, über den RF-Transceiver (20) und die Antenne (16) mittels RFID-Signalen mit einem RFID-Transponder (14) zu kommunizieren, sowie mit mindestens einem Zusatzsensor (24) zur Erfassung von Objekten an oder in dem Regal (10), wobei die Steuer- und Auswertungseinheit (22) dafür ausgebildet ist, Veränderungen der Fachbelegung aus Informationen des Zusatzsensors (24) zu erkennen und örtlich zuzuordnen,
**dadurch gekennzeichnet,**
**dass** Antenne (16) und Zusatzsensor (24) derart ausgebildet und angeordnet sind, dass Informationen der Antenne (16) eine örtliche Zuordnung zu einer Regalebene und die Informationen des Zusatzsensors (24) eine örtliche Zuordnung innerhalb der Regalebene ermöglichen
oder dass der Zusatzsensor (24) einen Laserscanner aufweist, der derart ausgebildet und angeordnet ist, dass die Informationen des Zusatzsensors (24) eine örtliche Zuordnung in horizontaler und vertikaler Richtung ermöglichen.

2. RFID-Lesevorrichtung (18) nach Anspruch 1,
wobei der zusätzliche Sensor (24) ein optoelektronischer Sensor ist.

3. RFID-Lesevorrichtung (18) nach Anspruch 1 oder 2,
wobei die Antenne (16) parallel zu Regalelementen angeordnet oder als Regalelement genutzt ist.

4. RFID-Lesevorrichtung (18) nach einem der vorhergehenden Ansprüche,
wobei die Antenne (16) eine über die Regalbreite oder Regalhöhe langgestreckte Antenne ist.

5. RFID-Lesevorrichtung (18) nach einem der vorhergehenden Ansprüche,
die je eine Antenne (16) an jeder Regalebene aufweist, wobei die Antennen (16) jeweils Antennenkeulen (26) nur nach oben oder nur nach unten aufweisen, oder die je eine Antenne (16) an jeder zweiten Regalebene aufweist, wobei die Antennen (16) jeweils Antennenkeulen (26) nach oben und nach unten aufweisen.

6. RFID-Lesevorrichtung (18) nach einem der vorhergehenden Ansprüche, wobei der Zusatzsensor (24) eine Anordnung von Lichtschranken oder ein Lichtgitter aufweist.

7. RFID-Lesevorrichtung (18) nach einem der vorhergehenden Ansprüche, wobei die Antenne (16) und der Zusatzsensor (24) derart am Regal (10) angeordnet sind, dass ein Einstellen und/oder eine Entnahme von Waren oder Behältern (12) erkannt wird.

8. RFID-Lesevorrichtung (18) nach einem der vorhergehenden Ansprüche, wobei die Antenne (16) und/oder der Zusatzsensor (24) ein Anzeigeelement aufweist.

9. Verfahren zur Fachbelegungserkennung in einem Regal (10), bei dem über eine Antenne (16) mittels RFID-Signalen mit RFID-Transpondern (14) in dem Regal (10) kommuniziert wird, wobei mit einem Zusatzsensor (24) Objekte an oder in dem Regal (10) erfasst werden, wobei Veränderungen der Fachbelegung Informationen des Zusatzsensors (24) erkannt und örtlich zugeordnet werden
**dadurch gekennzeichnet,**
**dass** eine örtliche Zuordnung zu einer Regalebene aus Informationen der Antenne (16) und eine örtliche Zuordnung innerhalb der Regalebene aus Informationen des Zusatzsensors (24)
oder dass mittels eines Laserscanner als Zusatzsensor (24) eine örtliche Zuordnung in horizontaler und vertikaler Richtung aus den Informationen des Zusatzsensors (24) erfasst wird.

## Claims

1. An RFID reading apparatus (18) for bin occupancy detection in a shelf (10), the RFID reading apparatus (18) having at least one antenna (16), an RF transceiver (20) connected to the antenna (16), a control and evaluation unit (22) which is configured to communicate with an RFID transponder (14) by means of RFID signals via the RF transceiver (20) and the antenna (16), and at least one additional sensor (24) for detecting objects at or in the shelf (10), wherein the control and evaluation unit (22) is configured to detect and locally associate changes of the bin occupancy from information of the additional sensor (24),
**characterized in that** the antenna (16) and the additional sensor (24) are configured and arranged such that the information of the antenna (16) enables a local association with a shelf level and the information of the additional sensor (24) enables a local association within the shelf level, or **in that** the additional sensor (24) comprises a laser scanner which is configured and arranged such that the information of the additional sensor (24) enables a local association in a horizontal direction and in a vertical direction.

2. The RFID reading apparatus (18) in accordance with claim 1,
wherein the additional sensor (24) is an optoelectronic sensor.

3. The RFID reading apparatus (18) in accordance with claim 1 or 2,
wherein the antenna (16) is arranged in parallel with the shelf elements or is used as a shelf element.

4. The RFID reading apparatus (18) in accordance with any of the preceding claims,
wherein the antenna (16) is an antenna elongated over one of a shelf width and a shelf height.

5. The RFID reading apparatus (18) in accordance with any of the preceding claims,
which has a respective antenna (16) at each shelf level, wherein the antennas (16) each have antenna lobes (26) only upwardly or only downwardly, or which has a respective antenna (16) at every second shelf level, with the antennas (16) each having antenna lobes (26) upwardly and downwardly.

6. The RFID reading apparatus (18) in accordance with any of the preceding claims,
wherein the additional sensor (24) has an arrangement of light barriers or a light grid.

7. The RFID reading apparatus (18) in accordance with any of the preceding claims,
wherein the antenna (16) and the additional sensor (24) are arranged at the shelf (10) such that a placement and/or a removal of goods or containers (12) is detected.

8. The RFID reading apparatus (18) in accordance with any of the preceding claims,
wherein the antenna (16) and/or the additional sensor (24) has a display element.

9. A method for bin occupancy detection in a shelf (10), wherein communication takes place with RFID transponders (14) in the shelf (10) by means of RFID signals via an antenna (16), wherein objects at or in the shelf (10) are detected using an additional sensor (24), wherein changes of the bin occupancy are detected and locally associated from information of the additional sensor (24),
**characterized in that** a local association with a shelf level is detected from information of the antenna (16) and a local association within the shelf level is detected from information of the additional sensor (24),
or **in that**, by means of a laser scanner used as the additional sensor (24), a local association in a horizontal direction and in a vertical direction is detected from information of the additional sensor (24).

## Revendications

1. Dispositif de lecture RFID (18) pour la reconnaissance d'occupation de casiers dans une étagère (10), comportant au moins une antenne (16), un émetteur-récepteur RF (20) connecté à l'antenne (16), et une unité de commande et d'évaluation (22) réalisée pour communiquer avec un trans-pondeur RFID (14) via l'émetteur-récepteur RF (20) et via l'antenne (16) au moyen de signaux RFID, ainsi qu'au moins un capteur supplémentaire (24) pour détecter des objets sur ou dans l'étagère (10), l'unité de commande et d'évaluation (22) étant réalisée pour reconnaître et associer localement des modifications de l'occupation de casiers à partir des informations du capteur supplémentaire (24),
**caractérisé en ce que**
l'antenne (16) et le capteur supplémentaire (24) sont réalisés et agencés de telle sorte que des informations de l'antenne (16) permettent une association locale à un plan de l'étagère et que les informations du capteur supplémentaire (24) permettent une association locale à l'intérieur du plan de l'étagère,
ou **en ce que** le capteur supplémentaire (24) comprend un scanneur laser qui est réalisé et agencé de telle sorte que les informations du capteur supplémentaire (24) permettent une association locale en direction horizontale et verticale.

2. Dispositif de lecture RFID (18) selon la revendication 1,
dans lequel le capteur supplémentaire (24) est un capteur optoélectronique.

3. Dispositif de lecture RFID (18) selon la revendication 1 ou 2,
dans lequel l'antenne (16) est agencée parallèlement aux éléments d'étagère ou est utilisée en tant qu'élément d'étagère.

4. Dispositif de lecture RFID (18) selon l'une des revendications précédentes, dans lequel l'antenne (16) est une antenne allongée sur la largeur de l'étagère ou sur la hauteur de l'étagère.

5. Dispositif de lecture RFID (18) selon l'une des revendications précédentes, qui comprend une antenne (16) respective sur chaque plan de l'étagère, les antennes (16) présentant chacune des lobes d'antenne (26) uniquement vers le haut ou uniquement vers le bas, ou
qui comprend une antenne (16) respective sur un plan d'étagère sur deux, les antennes (16) présentant chacune des lobes d'antenne (26) vers le haut et vers le bas.

6. Dispositif de lecture RFID (18) selon l'une des revendications précédentes, dans lequel le capteur supplémentaire (24) comprend un agencement de barrières lumineuses ou une grille lumineuse.

7. Dispositif de lecture RFID (18) selon l'une des revendications précédentes, dans lequel l'antenne (16) et le capteur supplémentaire (24) sont agencés sur l'étagère (10) de manière à reconnaître une insertion et/ou un prélèvement de marchandises ou de récipients (12).

8. Dispositif de lecture RFID (18) selon l'une des revendications précédentes, dans lequel l'antenne (16) et/ou le capteur supplémentaire (24) comportent) un élément d'affichage.

9. Procédé de reconnaissance d'occupation de casiers dans une étagère (10), dans lequel une communication s'effectue avec des transpondeurs RFID (14) dans l'étagère (10) par une antenne (16) au moyen de signaux RFID, des objets sur ou dans l'étagère (10) étant détectés par un capteur supplémentaire (24), des modifications de l'occupation de casiers étant reconnues et associées localement à partir d'informations du capteur supplémentaire (24),
**caractérisé en ce que**
une association locale à un plan de l'étagère est détectée à partir d'informations de l'antenne (16), et une association locale à l'intérieur du plan de l'étagère est détectée à partir d'informations du capteur supplémentaire (24),
ou **en ce qu'**au moyen d'un scanneur laser à titre de capteur supplémentaire (24), une association locale en direction horizontale et verticale est détectée à partir des informations du capteur supplémentaire (24)
